(19) Europäisches Patentamt
European Patent Office
Office européen des brevets

(11) Publication number: 0 026 576 B1

# (12) EUROPEAN PATENT SPECIFICATION

(45) Date of publication of patent specification: 09.11.83

(51) Int. Cl.³: B 01 D 13/04, B 01 D 31/00, C 08 J 5/18, C 08 J 3/24, C 08 F 12/24

(21) Application number: 80302939.6

(22) Date of filing: 22.08.80

## (54) Permselective membrane.

(30) Priority: 22.08.79 JP 105973/79

(43) Date of publication of application: 08.04.81 Bulletin 81/14

(45) Publication of the grant of the patent: 09.11.83 Bulletin 83/45

(84) Designated Contracting States: BE DE FR GB IT NL

(56) References cited: FR - A - 2 391 752

(73) Proprietor: ASAHI GLASS COMPANY LTD.
No. 1-2, Marunouchi 2-chome
Chiyoda-ku, Tokyo (JP)

(72) Inventor: Hiroshi, Kawahara
3-51-7, Utsukushigaoka Midori-ku
Yokohama-shi Kanagawa-ken (JP)
Inventor: Tetsuro, Yasuda
77-12, Honjuku-cho Asahi-ku
Yokohama-shi Kanagawa-ken (JP)

(74) Representative: Warden, John Christopher et al,
R.G.C. Jenkins & Co. 12-15, Fetter Lane
London EC4A 1PL (GB)

The file contains technical information submitted after the application was filed and not included in this specification

EP 0 026 576 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Permselective membrane

The present invention relates to a permselective membrane. More particularly, it relates to a permselective membrane which has excellent water flux and solute rejection and also excellent chemical resistance, heat resistance and compaction resistance and is easily fabricable.

In separation processes using a membrane, for example reverse osmosis, a solute in an aqueous solution can be separated without a phase change, and therefore with low energy consumption. Therefore, this method is employed in various fields such as the desalination of brine or sea water and the separation of other inorganic or organic materials from liquid media. The process is likely to be employed in various other fields.

As typical examples of reverse osmosis membranes, there have been disclosed cellulose acetate membranes in U.S. Patent 3,133,132 and 3,133,137 by Loeb and Sourirajan; and an aromatic polyamide or polyamide hydrazide membrane in U.S. Patent 3,567,632, by Richter and Hoehu. The water fluxes and solute rejections (desalting coefficient) of these membranes have not however been satisfactory. Moreover, the chemical resistances, heat resistances, compaction resistances and fabricabilities of the membranes are not always adequate.

It is an object of the present invention to provide a permselective membrane which has excellent water flux, solute rejection, chemical resistance, heat resistance and compaction resistance and which can be easily fabricated.

The present invention provides a permselective membrane which is obtained by fabricating and crosslinking a methylolated vinylphenol polymer having repeating units of formula:

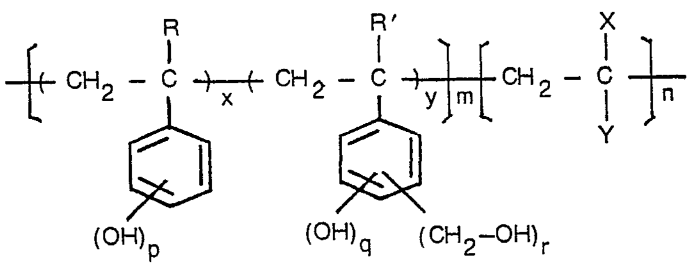

(I)

wherein R represents a hydrogen atom or a $C_1$—$C_4$ alkylk group p, q and r are respectively 1 or 2; x and y are respectively selected so as to give a ratio of methylol groups to hydroxy groups of from 0.01:1 to 2.0:1; m and n are respectively integers such that $1 \geqq m/m+n \geqq 0.2$ and more preferably $1 \geqq m/m+n \geqq 0.6$; and X and Y are selected from —Cl, —Br,

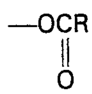

(R is as defined above), —CN, —$NO_2$,

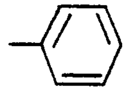

,

—R″ and —$CO_2$ R″ (wherein R″ represents hydrogen or a $C_1$—$C_4$ alkyl group) or X may represent —$OCH_3$,

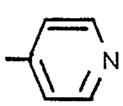

,

—$SO_3$Na or

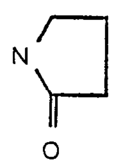

,

in which case Y is hydrogen.

The methylolated vinylphenol polymer may be obtained by copolymerizing a suitable ethylenically unsaturated monomer with a vinylphenol.

Suitable unsaturated monomers include acrylic acid, methyl methacrylate, styrene, acrylonitrile, isobutylene, methyl vinyl ether, N-vinyl-pyrrolidone, 4-vinylpyridine and sodium vinylsulfonate. The monomer is preferably of formula $CH_2{=}CXY$, wherein X and Y are as defined above.

The permselective membrane of the present invention has excellent water flux and solute rejection, and also excellent chemical resistance in a pH range of 1 to 14, heat resistance, compact resistance, chlorine resistance and bacteria resistance and has balanced characteristics.

The fabricability is excellent. When the membrane is fabricated on a porous support, the process is remarkably easy and a permselective membrane having remarkably good and reproducible characteristics can be obtained. The membrane may be used as a reverse osmosis membrane or an an ultrafilter.

The methylolated vinylphenol polymer having repeated units of formula (I) used in the present invention can be easily obtained by methylolating poly(o-, m- or p-vinylphenol) by a conventional method, for example a reaction with formaldehyde.

The ratio of methylol component to the total methylolated vinylphenol polymer affects the degree of crosslinkage and the performance of the resulting permselective membrane. When it is too small, the desired characteristics are not obtained. In the formula, the ratio of x:y which relates to the ratio of the methylol component to the polymer is selected so as to give a ratio of methylol groups to hydroxy groups of from 0.01:1 to 2.0:1 in the polymer. The ratio of methylol groups to hydroxy groups is preferably in a range of 0.1:1 to 1.0:1 from the point of view of stability of the methylolated vinylphenol polymer in solution and the fabricability of the membrane. The ratio is more preferably in a range of 0.2:1 to 0.8:1 to enhance the performance, water flux and solute rejection of the membrane. The molecular weight of the methylolated vinylphenol polymer affects the fabricability of the membrane and to its mechanical characteristics and is preferably in a range of 300 to a few hundred thousand especially 1,000 to 50,000.

The methylolated vinylphenol polymer is preferably crosslinked with a catalyst in a solvent.

The catalyst can be an inorganic acid such as sulfuric acid, hydrochloric acid or phosphoric acid or an organic acid such as acetic acid or paratoluene-sulfonic acid; or a base such as an alkali metal hydroxide, ammonia, an amine or a quaternary ammonium salt. When 0.1 to 3 wt.% of sulfuric acid in a solvent is used as the catalyst, the degrees of crosslinkage and sulfonation of the membrane can be controlled to give the desired values. Therefore, sulfuric acid is preferably used. The catalyst is usually used at a ratio of 0.05 to 10 times by weight preferably 0.25 to 2 times by weight of the methylolated vinylphenol polymer. The acid or base catalyst may be used in combination with a heat treatment.

The solvent for the methylolated vinylphenol polymer can be any solvent such as an alcohol, ketone or ether. It is preferable to use a lower alcohol having 8 or fewer carbon atoms, for example methanol, ethanol, n-propanol or isopropanol; or a mixed solvent of an aqueous alcohol solution which contains up to 90 wt.% of water. When the solvent is used the content of the methylolated vinylphenol polymer in the solvent is preferably in a range of 0.01 to 5 wt.% especially 0.1 to 3 wt.%.

In a preferred process, a solution of the methylolated vinylphenol polymer in a solvent with a catalyst is heated at a temperature of 50 to 180°C, preferably 100 to 155°C for a time of 10 sec. to 6 hr, preferably 0.5 min, to 1 hr, to crosslink it. The crosslinked methylolated vinylphenol polymer is obtained. The cross-linked product can then be formed into a membrane. It is preferable to crosslink the methylolated vinylphenol polymer during the fabrication of the membrane. The fabrication is preferably carried out by forming the membrane on a suitable porous support. The porous support can be made of cellulose esters such as nitrocellulose and cellulose acetate; polysulfone, polyethersulfone, polystyrene, polyvinyl chloride, chlorinated polyvinyl chloride, polycarbonate, polyacrylonitrile and polyesters. The polymer can be reinforced with a woven or nonwoven fabric. The pore diameter of the porous support is preferably less than 500 nm, more preferably less than 100 nm, for especially high solute rejection when the permselective membrane is used as a reverse osmosis membrane. The configuration of the porous support can be a flat tubular or hollow configuration. The configuration of the permselective membrane of the present invention can be varied according to the configuration of the porous support.

The support preferably has a thickness of 10 to 500 $\mu$m.

The most preferred porous support is made of a polysulfone and is preferably a product having a thickness of 10 to 500 $\mu$m obtained by a flow-spreading a solution of the polysulfone in a polar solvent such as dimethylformamide to form a sheet and immersing it in water.

The crosslinking and fabrication of the methylolated vinylphenol polymer on the porous support can be carried out by any suitable process such as flow-spreading the solution of the methylolated vinylphenol polymer with the acid on the porous support; spraying or coating the solution; floating the porous support on the solution or immersing the solution into the porous support.

In the fabrication, the stability of the membrane can be improved by incorporating a surfactant such as sodium laurylsulfate, sodium alkylbenzenesulfonate or polyethyleneoxide in the solution of the methylolated vinylphenol polymer, at a ratio of 0.01 to 1 wt.%.

In one preferred process a thin layer of the solution of the methylolated vinylphenol polymer is

formed on one or both surface of the porous support, all or part of the solvent is evaporated and the membrane is heat-treated for a suitable time to perform the crosslinking treatment.

The resulting permselective membrane of the methylolated vinylphenol polymer is supposed to have a pore diameter of 0.5 to 30 nm. The membrane formed on the porous support has thickness of 5 to 500 nm, more preferably of 10 to 100 nm in practical applications.

The characteristics for the permselective membrane especially the water flux can be further improved by immersing the membrane of the methylolated vinylphenol polymer in an aqueous solution of an organic or inorganic acid or base or a salt thereof.

The compounds used for the post-treatment can be organic acids such as sulfuric acid, sulfuric acid anhydride, chlorosulfonic acid, hydrochloric acid, and phosphoric acid; organic acids such as methane sulfonic acid and benzenesulfonic acid; carboxylic acids such as acetic acid, maleic acid, benzoic acid and iminodiacetic acid; phenols such as phenol and catechol; alkali metal salts and alkaline earth metal salts thereof; and inorganic bases such as sodium hydroxide, barium hydroxide and ammonia; and organic bases such as triethylamine, ethylenediamine and polyethyleneimine.

When the permselective membrane of the present invention is produced from a vinylphenol polymer, it is possible to simultaneously carry out the methylolation, the crosslinking and the fabrication.

In such process, an alcoholic aqueous solution of the vinyl-phenol polymer, formaldehyde and an acid is heat-treated to perform the methylolation and the partial crosslinking and the solution is coated on or immersed into the porous support and is heated to complete the crosslinkage.

In the examples, the solute rejection is given by the following equation:

$$\text{Solute rejection (\%)} = \left( \frac{\begin{matrix}\text{Solute content in} \\ \text{feed solution}\end{matrix} - \begin{matrix}\text{Solute content in} \\ \text{permeated solution}\end{matrix}}{\text{Solute content in feed solution}} \right) \times 100$$

The present invention will be further illustrated by the following examples and references which are provided for purposes of illustration only and are not to be construed as limiting the present invention.

Example 1

A solution was prepared containing 0.5 wt. part of methylolated poly-p-vinylphenol having a ratio of methylol groups to hydroxy groups of between 0.1:1 and 1.0:1, and an average molecular weight between 1000 and 50,000, between 0.125 and 1 wt. part of conc. sulfuric acid, 0.05 wt. part of sodium laurylsulfate, 66 wt. parts of water and 33 wt. parts of isopropylalcohol. A porous polysulfone support membrane having a thickness between 10 and 500 $\mu m$ was obtained by coating a solution of polysulfone in dimethyl-formamide on a support and dipping it into water and then dipping it into the solution of methylolated poly-p-vinylphenol. The treated support membrane was taken up and vertically held at ambient temperature for 1 min. in air and was heated and dried in an air-oven at 150°C for 15 minutes to perform a crosslinking reaction. The membrane was then dipped into an aqueous solution of barium hydroxide (0.1 wt.%) at ambient temperature for 15 minutes.

Example 2

In accordance with the process of Example 1 except that 0.05 wt. part of sodium laurylsulfate is not incorporated, a permselective membrane was prepared and tested. A salt rejection was 98.7% and a water flux was 0.40 $m^3/m^2$day.

Example 3

In accordance with the process of Example 1 except that the treatment in the 0.1 wt.% aqueous solution of barium hydroxide was not carried out, a permselective membrane was prepared and tested. A salt rejection was 99.1% and a water flux eas 0.38 $m^3/m^2$day.

Example 4

In accordance with the process of Example 1 except that 66 wt. parts of water and 40 wt. parts of ethyl alcohol were used instead of 66 wt. parts of water and 33 wt. parts of isopropyl alcohol, a permselective membrane was prepared and tested. A salt rejection was 99.6% and a water flux was 0.29 $m^3/m^2$day.

Example 5

In accordance with the process of Example 1 except that 1.0 wt. part of the methylolated poly-p-vinylphenol and 1.0 wt. part of conc. sulfuric acid were used to vary the ratios, a permselective membrane was prepared and tested. A salt rejection was 98.9% and a water flux was 0.32 $m^3/m^2$day.

Reference 1

In accordance with the process of Example 5 except that 1.0 wt. part of poly-p-vinylphenol was used instead of the methylolated poly-p-vinylphenol, a permselective membrane was prepared and tested. A salt rejection was 21% and a water flux was 0.26 $m^3/m^2$day.

Example 6

In accordance with the process of Example 1 except that 0.5 wt. part of methylolated poly-p-vinylphenol having a ratio of methylol groups to hydroxy groups of 0.16 was used as the methylolated poly-p-vinylphenol, a permselective membrane was prepared and tested. A salt rejection was 90% and a water flux was 0.55$m^3/m^2$day.

Example 7

In accordance with the process of Example 1 except that a kind of the methylolated poly-p-vinylphenol and the ratios to water and isopropyl alcohol were varied to use 0.5 wt. part of methylolated poly-p-vinylphenol having a ratio of methylol groups to hydroxy groups of 1.20 and 40 wt. parts of water and 60 wt. parts of isopropyl alcohol were used, a permselective membrane was prepared and tested. A salt rejection was 92.0% and a water flux was 0.08 $m^3/m^2$day.

Examples 8 to 11

The permselective membrane obtained in Example 1 was dipped in each of the following solutions in the following conditions. Each reverse osmosis test of each permselective membrane was carried out by using 3.5 wt.% aqueous solution of sodium chloride under a pressure of 60 kg./$cm^2$ at the ambient temperature.

The results are shown in Table 1.

TABLE 1

| | Condition for dipping membrane | Salt rejection (%) | Water flux ($m^3/m^2$ day) |
|---|---|---|---|
| Exp. 8 | water, 60°C: 80 hr. | 99.0 | 0.36 |
| Exp. 9 | 1N—$H_2SO_4$ Ambient temp. 200 hr. | 98.8 | 0.34 |
| Exp. 10 | 1N—NaOH Ambient temp. 40 days | 97.8 | 0.45 |
| Exp. 11 | 50 ppm NaOCl Ambient temp. 60 hr. | 98.5 | 0.37 |

The results show that the permselective membranes of the present invention have excellent heat resistance, pH change resistance and chlorine resistance.

Example 12

A solution was prepared by dissolving 1.0 wt. part of poly-p-vinylphenol having a molecular weight of about 5,000, 0.24 wt. part of 35% aqueous solution of formaline, 0.10 wt. part of sodium laurylsulfate, 1.0 wt. part of conc. sulfuric acid in a mixed solvent of 132 wt. parts of water and 66 wt. parts of isopropyl alcohol and mixing them at 60°C for 3 hr. and cooling the reaction mixture to the ambient temperature.

The porous polysulfone support membrane having a thickness of 60 $\mu$m was dipped into the reaction mixture for 5 min. and the treated support membrane was taken up and vertically held at the ambient temperature for 1 min. in air and heated and dried in an air-oven at 150°C for 15 min. to perform a crosslinking reaction. The resulting membrane was dipped into 0.1 wt.% aqueous solution of barium hydroxide at the ambient temperature for 15 min. The reverse osmotic test of the permselective membrane was carried out by using 3.5 wt.% aqueous solution of sodium chloride under a pressure of 60 kg./$cm^2$ at the ambient temperature. A salt rejection was 98.2% and a water flux was 0.44 $m^3/m^2$day.

Example 13

A polymer obtained by a radical polymerization of 80 wt. parts of p-vinylphenol and 20 wt. parts of acrylic acid was methylolated with formaline to give a ratio of methylol groups to hydroxy groups of 0.25.

In accordance with the process of Example 1 except that 0.5 wt. part of the resulting polymer was used instead of 0.5 wt. part of the methylolated polyvinylphenol, a permselective membrane was prepared and tested. A salt rejection was 97.7% and a water flux was 0.62 $m^3/m^2$day.

Example 14

In accordance with the process of Example 13 except that 20 wt. parts of styrene was used instead of 20 wt. parts of acrylic acid, a permselective membrane was prepared and tested. A salt rejection was 98.4 % and a water flux was 0.25 $m^3/m^2$day.

Example 15

A polymer obtained by a copolymerization of 95 mol.% of p-vinylphenol and 5 mol.% of sodium vinylsulfonate, was methylolated with formaline to give a ratio of methylol groups to hydroxy groups of 0.3.

In accordance with the process of Example 1 except that 0.5 wt. part of the polymer was used instead of 0.5 wt. part of the polymer of Example 1, a permselective membrane was prepared and tested. A salt rejection was 98.5% and a water flux was 0.41 $m^3/m^2$day.

Example 16

In accordance with the process of Example 15 except that 5 mol.% of N-vinylpyrrolidone was used instead of 5 mol.% of sodium vinylsulfonate, a permselective membrane was prepared and tested. A salt rejection was 96.3% and a water flux was 0.43 $m^3/m^2$day.

Examples 17 to 25

The permselective membrane obtained in Example 1 was dipped in each solution in the following conditions and then, each reverse osmosis test was carried out by using 0.5 wt.% aqueous solution of sodium chloride under a pressure of 40 kg./$cm^2$. The results are shown in Table 2.

TABLE 2

| | Condition for post-treatment | Salt rejection (%) | Water flux ($m^3/m^2$ day) |
|---|---|---|---|
| Exp. 17 | 1% aq. sol. of acetic acid 60°C: 15 min. | 99.1 | 0.45 |
| Exp. 18 | 1% aq. sol. of sodium imino-diacetate 60°C: 15 min. | 99.4 | 0.64 |
| Exp. 19 | 90% $H_2SO_4$ ambient temp.; 1 hr. | 99.2 | 0.98 |
| Exp. 20 | 1% ammonia ambient temp.; 7 day | 99.0 | 0.75 |
| Exp. 21 | 1% aq. sol. of urea ambient temp.; 20 hr. | 98.0 | 0.47 |
| Exp. 22 | 1% aniline ambient temp.; 20 hr. | 98.2 | 0.49 |
| Exp. 23 | 1% phenolsulfonic acid ambient temp.; 1 day | 98.8 | 0.60 |
| Exp. 24 | 10% triethylamine ambient temp.; 4 day | 98.9 | 0.65 |
| Exp. 25 | gaseous $SO_3$ ambient temp.; 15 min. | 98.7 | 0.78 |

## Claims

1. A permselective membrane comprising a cross-linked polymer, characterized in that it is obtained by crosslinking a methylolated vinylphenol polymer having repeating units of formula:

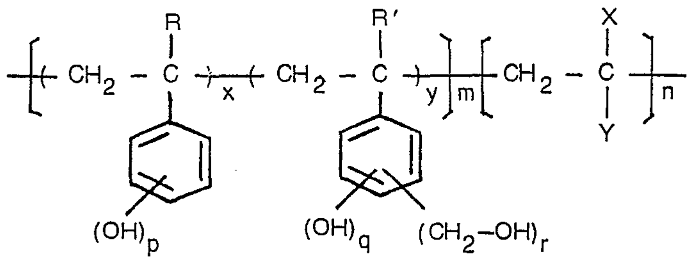

(I)

wherein R and R′ each represent a hydrogen atom or a $C_1$—$C_4$ alkyl group, p, q and r are respectively 1 or 2; x and y are respectively selected so as to give a ratio of methylol groups to hydroxy groups of from 0.01:1 to 2.0:1; m and n are respectively integers such that $1 \geqq m/m+n \geqq 0.2$; and X and Y are selected from —Cl, —Br,

$-\underset{\underset{O}{\|}}{OC}R$, —CN, $-NO_2$,

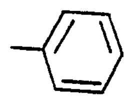

,

—R″ and $CO_2R''$ (wherein R″ represents a hydrogen atom or a $C_1$—$C_4$ alkyl group) or X may represent $OCH_3$,

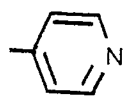

,

$-SO_3Na$ or

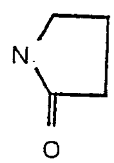

in which case Y is hydrogen.

2. A permselective membrane according to Claim 1, characterized in that it is crosslinked on a porous support.

3. A permselective membrane according to Claim 2 characterized in that said porous support has a thickness of 10 to 500 $\mu$m.

4. A permselective membrane according to claim 2 or claim 3 characterized in that said porous support is made from a polymer selected from cellulose esters, polysulfone, polyethersulfone, polystyrene, polyvinyl chloride, chlorinated polyvinyl chloride, polycarbonate, polyacrylonitrile and polyesters.

5. A permselective membrane according to any one of claim 2 to 4 characterized in that the thickness of the methylolated vinylphenol polymer on the porous support is in a range of 5 to 500 nm.

6. A permselective membrane according to any preceding claim characterized in that it is a reverse osmosis membrane or an ultrafilter.

7. A permselective membrane according to any preceding claim characterized in that the said polymer is produced by copolymerizing a vinylphenol with an ethylenically unsaturated monomer having the formula $CH_2$=CXY wherein X and Y are as defined in claim 1.

8. A permselective membrane according to claim 7, characterized in that the said vinylphenol polymer is produced by copolymerizing a vinylphenol with an ethylenically unsaturated monomer selected from acrylic acid, methyl methacrylate, styrene, acrylonitrile, methyl vinyl ether, isobutylene, N-vinylpyrrolidone, 4-vinylpyridine and sodium vinylsulfonate.

9. A permselective membrane according to any preceding claim characterized in that the polymer is crosslinked by a heat-treatment with an acid or a base as a catalyst.

10. A permselective membrane according to any preceding claim characterized in that the polymer is crosslinked with sulfuric acid as a catalyst.

**Revendications**

1. Membrane à perméabilité sélective comprenant un polymère rèticulé, caractérisée en ce qu'on l'obtient en réticulant un polymère de vinylphénol méthylolé contenant des motifs récurrents de formule:

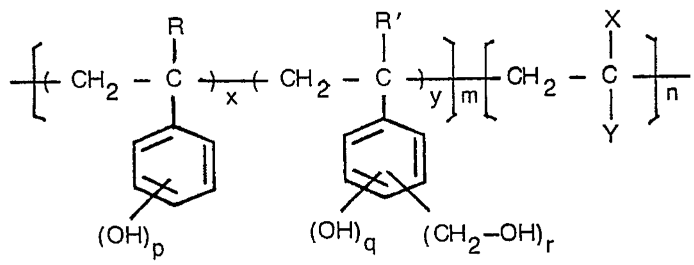

(I)

dans laquelle R et R' représentent chacun un atome d'hydrogène ou un radical alkyle en $C_1$—$C_4$, p, q et r sont respectivement 1 ou 2; x et y sont choisis respectivement pour fournir un rapport des groupes méthylol aux groupes hydroxy de 0,01:1 à 2,0:1; m et n sont respectivement des nombres entiers tels que $1 \geq m/m+n \geq 0{,}2$; et X et Y sont choisis parmi: —Cl, — Br,

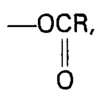, —CN, —$NO_2$

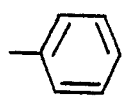,

—R'' et $CO_2R''$ (R'' représentant un atome d'hydrogène ou un radical alkyle en $C_1$—$C_4$) ou X peut représenter $OCH_3$,

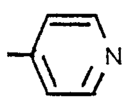,

—$SO_3Na$ ou

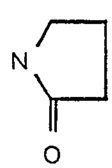,

auquel cas Y est un atome d'hydrogène.

2. Membrane à perméabilité sélective selon la revendication 1, caractérisée en ce qu'elle est réticulée sur un support poreux.

3. Membrane à perméabilité sélective selon la revendication 2, caractérisée en ce que ledit support poreux présente une épaisseur de 10 à 500 microns.

4. Membrane à perméabilité sélective selon la revendication 2 ou 3, caractérisée en ce que ledit support poreux est réalisé à partir d'un polymère choisi parmi les esters de cellulose, la polysulfone, la polyéthersulfone, le polystrène, le poly(chlorure de vinyle), le poly(chlorure de vinyle) chloré, le polycarbonate, le polyacrylonitrile et les polyesters.

5. Membrane à perméabilité sélective selon l'une quelconque des revendications 2 à 4, caractérisée en ce que l'épaisseur du polymère de vinylphénol méthylolé sur le support poreux est dans un intervalle allant de 5 à 500 nm.

6. Membrane à perméabilisé sélective selon l'une quelconque des revendications précédentes, caractérisée en ce qu'elle est une membrane pour osmose inverse ou une membrane d'ultrafitration.

7. Membrane à perméabilité sélective selon l'une quelconque des revendications précédentes, caractérisée en ce que ledit polymère est produit en copolymérisant un vinylphénol avec un monomère à insaturation éthylénique répondant à la formule $CH_2{=}CXY$ dans laquelle X et Y sont tels que définis dans la revendication 1.

8. Membrane à perméabilité sélective selon la revendication 7, caractérisée en ce que ledit polymère de vinylphénol est produit en copolymérisant un vinylphénol avec un monomère à insaturation éthylénique choisi parmi l'acide acrylique, le méthacrylate de méthyle, le styrène, l'acrylonitrile, l'éther méthylvinylique, l'isobutylène, la N-vinylpyrrolidone, la 4-vinylpiridine et le vinylsulfonate de sodium.

9. Membrane à perméabilité sélective selon l'une quelconque des revendications précédentes, caractérisée en ce que le polymère est réticulé par un traitement thermique avec un acide ou une base à titre de catalyseur.

10. Membrane à perméabilité sélective selon l'une quelconque des revendications précédentes, caractérisée en ce que le polymère est réticulé avec de l'acide sulfurique à titre de catalyseur.

**Patentansprüche**

1. Permselektive Membran mit einem vernetzten Polymeren, dadurch gekennzeichnet, daß es erhalten wird durch Vernetzung eines methylolisierten Vinylphenolpolymeren mit Struktureinheiten der folgenden Formel:

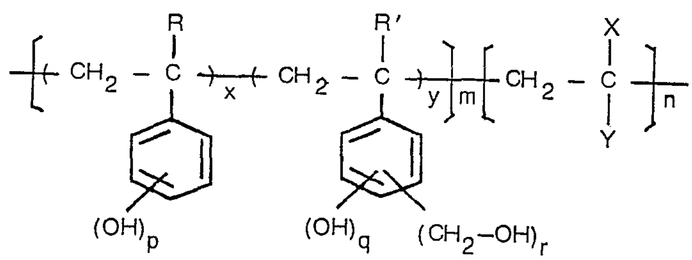

(I)

in der R and R' jeweils ein Wasserstoffatom bedeuten oder eine $C_1$—$C_4$ Alkylgruppe, in der p, q and r jeweils 1 oder 2 bedeuten und der x und y jeweils derart ausgewählt sind, daß sich ein Verhältnis der Methylolgruppen zu den Hydroxygruppen von 0,01:1 bis 2.0:1 ergibt, wobei m und n jeweils ganze Zahlen sind, so daß $1 \geqq m/m+n \geqq 0{,}2$ gibt und wobei X und Y ausgewählt sind aus der Gruppe —Cl, —Br,

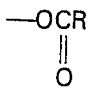 —CN, —$NO_2$

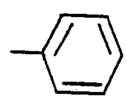,

—R'' und $CO_2R''$ (wobei R'' ein Wasserstoffatom oder eine $C_1$—$C_4$ Alkylgruppe bedeutet) oder wobei X ausgewählt ist aus der Gruppe $OCH_3$,

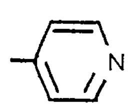,

—$SO_3Na$ oder

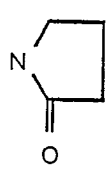

während Y für Wasserstoff steht.

2. Permselektive Membran nach Anspruch 1, dadurch gekennzeichnet, daß sie auf einem porösen Träger vernetzt ist.

3. Permselektive Membran nach Anspruch 2, dadurch gekennzeichnet, daß der poröse Träger eine Dicke von 10 bis 500 $\mu m$ hat.

4. Permselektive Membran nach einem der Ansprüche 2 oder 3, dadurch gekennzeichnet, daß der poröse Träger aus einem Polymeren besteht, ausgewählt aus Celluloseestern, Polysulfon, Polyäthersulfon, Polystyrol, Polyvinylchlorid, chloriertes Polyvinylchlorid, Polycarbonat, Polyacrylnitril und Polyestern.

5. Permselektive Membran nach einem der Ansprüche 2 bis 4, dadurch gekennzeichnet, daß die Dicke des methylolisierten Vinylphenolpolymeren auf dem porösen Träger im Bereich von 5 bis 500 nm liegt.

6. Permselektive Membran nach einem der vorhergehenden Ansprüche, dadurch gekennzeichnet, daß es sich um eine Membran für die umgekehrte Osmose handelt oder um einen Ultrafilter.

7. Permselektive Membran nach einem der vorhergehenden Ansprüche, dadurch gekennzeichnet, daß das Polymere erhalten wird durch Copolymerisieren eines Vinylphenols mit einem äthylenisch ungesättigten Monomeren der Formel $CH_2{=}CXY$, wobei X und Y in Anspruch 1 definiert sind.

8. Permselektive Membran nach Anspruch 7, dadurch gekennzeichnet, daß das Vinylphenolpolymere erhalten wird durch Copolymerisieren eines Vinylphenols mit einem äthylenisch ungesättigten Monomeren, welche ausgewählt ist aus Acrylsäure, Methylmethacrylat, Styrol, Acrylnitril, Methylvinyläther, Isobutylen, N-Vinylpyrrolidon, 4-Vinylpyridin und Natriumvinylsulfonat.

9. Permselektive Membran nach einem der vorhergehenden Ansprüche, dadurch gekennzeichnet, daß das Polymere vernetzt ist durch Wärmebehandlung mit einer Säure oder einer Base als Katalysator.

10. Permselektive Membran nach einem der vorhergehenden Ansprüche, dadurch gekennzeichnet, daß das Polymere mit Schwefelsäure als Katalysator vernetzt wurde.